# EUROPEAN PATENT APPLICATION

(11) **EP 2 450 103 A1**
(43) Date of publication of application: **09.05.2012**
(21) Application number: 10306202.2
(22) Date of filing: 03.11.2010
(51) Int. Cl.: B01J 23/882, B01J 23/883, B01J 35/00, B01J 37/03, B01J 37/10, B01J 38/00, B01J 3/00, C10G 45/08

(54) **NOVEL BULK CATALYST PRECURSORS AND METHOD FOR OBTAINING SUCH BULK CATALYST PRECURSORS**

(71) Applicant: Centre National de la Recherche Scientifique (CNRS), 75016 Paris (FR)
(72) Inventor: Aymonier, Cyril, 33130 Begles (FR); Theodot, Manuel, 29000 Quimper (FR); Martinez, Cristina, 46138 Rafelbunyoi - Valencia (ES); Corma Canos, Avelino, 46020 Valencia (ES)
(74) Representative: Tetaz, Franck Claude Edouard

(57) **Abstract**

The instant invention concerns a method for preparing a bulk catalyst precursor comprising the following steps:
a) reacting precursors of the desired catalyst precursor in a mixture comprising, or consisting of, precursors and at least one solvent comprising water and/or alcohol, said mixture being under a pressure superior or equal to 5 bars and a temperature superior or equal to 100°C, and
b) recovering catalyst precursor, in particular as particles,

a bulk catalyst precursor comprising Group VIIIB and/or Group VIB metal, having a S_{BET} superior or equal to 80 m²/g, a bulk catalyst and a method for deep or ultra deep hydrodesulfuration.

## Description

The instant invention concerns a bulk catalyst precursor and a method for obtaining it. More particularly it concerns the field of hydrodesulfuration.

### PRIOR ART

The environmental regulations are becoming increasingly stringent. Significant reductions in the sulfur content of transportation fuels are going to be required. For example, by the end of this decade, maximum sulfur levels for distillate fuel will be limited to 10 wppm in Europe and Japan and 15 wppm in North America.

To meet these ultra-low sulfur requirements without expensive modifications to existing refineries, it is necessary to design new catalysts having increased properties, in particular very high activity for desulfurization, more particularly for distillate fuels at low to medium pressure.

Supported bimetallic nickel tungsten catalysts and their use in hydrotreatment of hydrocarbon feedstock are long known in the art. GB 820536 describes a process for the manufacture of mechanically strong supported catalyst particles comprising combinations of cobalt, nickel, molybdenum, vanadium or tungsten in which a spraydried alumina hydrate microspherical carrier material is used in an amount between 60 and 99 wt% relative to the total weight of the catalyst.

The use of a supported catalyst may present the benefit of dispersing the active phase, increasing therefore the accessibility of the active sites. However, the intrinsic activity of these sites may be reduced due to a strong interaction of the active phase with the support.

For a long time bulk catalyst for hydrodesulfurization (HDS) were thought to be poorly active. However, some recent works have been done in the last years.

The international application WO 2009/061295 discloses a method for preparing bulk bimetallic Group VIII/Group VIB catalyst precursor at a pressure of less than 1 atmosphere. This leads to bulk catalyst having a rather low specific surface area.

The international application WO 2007/048598 discloses a method for preparing bulk metallic Group VIII/Group VIB catalyst at high temperature, wherein the first and second metal compound remains at least partly in the solid state.

The prior art method for preparing bulk catalyst may be insufficient in terms of efficacy, cost efficiency, may be difficult to upscale to industrial scale, may not be friendly enough toward environment, for example by using solvents which are toxic or which can have adverse effects on the environment, may consume too much energy, may not be able to produce catalyst precursors and/or catalysts effective enough, may not be continuous, and/or may reject a lot of reagents.

The prior art catalysts and/or catalyst precursors may be insufficient in terms of specific surface area, efficiency, for example activity, selectivity, temperature needed for catalysis, the volume and/or quantity needed, not resistant enough to degradation, and/or their activity may decrease too rapidly or they may be too sensitive to poisoning.

### SUMMARY OF THE INVENTION

Following a first aspect, the invention has for subject matter a bulk catalyst precursor comprising Group VIIIB and/or Group VIB metal, in particular of the NiMo, CoMo, NiW, CoW, CoNiMo or CoNiW type, having a S_{BET} superior or equal to 80 m²/g, in particular superior or equal to 90 m²/g, more particularly superior or equal to 100 m²/g.

Following a second aspect, the invention has for subject matter a method for preparing a bulk catalyst precursor, in particular comprising at least one metal from Group VIIIB and/or one metal of Group VIB, more particularly of the NiMo, CoMo, NiW, CoW, CoNiMo or CoNiW type, comprising the following steps:
a) reacting precursors of the desired catalyst precursor in a mixture comprising, or consisting of, precursors and at least one solvent comprising, or consisting of, water and/or alcohol, said mixture being under a pressure superior or equal to 5 bars and a temperature superior or equal to 100°C, and
b) recovering catalyst precursor, in particular as particles.

### BRIEF DESCRIPTION OF THE FIGURES

Figures 1, 3, 5 and 7 present XRD of catalyst precursors according to the invention.
Figures 2, 4 and 6 show the scanning electron microscopy pictures of catalyst precursor particles according to the invention.
Figures 8, 9 and 10 show comparison of conversion obtained with catalysts according to the invention and with commercial catalysts.

### DETAILED DESCRIPTION OF THE INVENTION

The solvent(s) of the reaction mixture comprises, or consists of, water and/or alcohol. The alcohol may be chosen from the group consisting of methanol, ethanol, n-propanol, iso-propanol and their mixtures.

In particular the solvent is a mixture of water and alcohol.

The molar ratio water/alcohol may range from 99/1 to 1/99, in particular from 95/5 to 5/95, more particularly from 90/10 to 10/90, even more particularly from 80/20 to 20/80.

More particularly, the molar ratio water/alcohol ranges from 70/30 to 30/70, in particular from 65/35 to 35/65, more particularly from 60/40 to 40/60, even more particularly from 55/45 to 45/50.

Following an embodiment the molar ratio water/alcohol ranges from 53/47 to 47/53, in particular from 52/48 to 48/52, more particularly from 51/49 to 49/51, even more particularly the molar ratio water/alcohol is 50/50.

The precursor(s) in the solvent(s) may be a suspension, a dispersion or a solution.

Following a first embodiment, the mixture is homogeneous. In particular the mixture solubilises the precursors of the desired catalyst precursor, in this case the mixture, in particular comprising or consisting of precursor(s) and the solvent, is a solution.

This may be advantageous in terms of conservation of the devices used, it can lead to less harsh conditions and/or it may allow keeping the device into good or working condition longer.

In particular, the mixture is free of CO₂. This means in particular that the amount of CO₂ is inferior or equal to 0,1 % by weight, in particular to 100 ppm by weight, more particularly to 10 ppm by weight, and even more particularly to 1 ppm by weight relative to the total weight of the mixture, except the CO₂ which may arise from a precursor which is carbonated.

The mixture may also be free of surfactant. This means in particular that the amount of surfactant is inferior or equal to 0,1 % by weight, in particular to 100 ppm by weight, more particularly to 10 ppm by weight, and even more particularly to 1 ppm by weight relative to the total weight of the mixture.

The mixture may also be free of alumina and/or zeolite and/or the mixture may be free of particles.

The pressure may be superior or equal to 50 bars, in particular superior or equal to 75 bars, more particularly superior or equal to 100 bars, and even more particularly superior or equal to 125 bars.

The temperature may be superior or equal to 150°C, in particular superior or equal to 175°C, more particularly superior or equal to 200°C, and even more particularly superior or equal to 225 °C.

The temperature and pressure may be superior or equal to 75 bars and 175°C, in particular to 100 bars and 200°C, more particularly to 125 bars and 225°C.

In particular, the mixture is under supercritical conditions, more particularly the reaction proceeds or is started while the mixture is under supercritical conditions.

Following a specific embodiment embodiment, the conditions are such as to get the mixture, in particular the solvents into supercritical, more particularly the pressure and temperature are such as to get the mixture into supercritical conditions.

In particular in case of ethanol a pressure superior or equal to 64 bars and a temperature superior or equal to 243°C, and in case of water a pressure superior or equal to 221 bars and a temperature superior or equal to 374°C may be used.

The precursors are soluble in alcohol and/or water.

The precursors may be chosen from metal complexes of the Group VIIIB and/or of the Group VI, in particular Ni, Mo, Co and/or W, with acetylacetonate (acac), acetates, carbonates, nitrates, chlorides, hydroxides, alcoxydes, in particular methoxyde, ethoxyde and propoxyde, and their mixtures.

In particular the Group VIIIB metal is a non-noble metal.

The molar ratio of the precursor(s) of the Metal of Group VIIIB / the precursor(s) of the Metal of the Group VI may range from 10/1 to 1/10, in particular from 7/3 to 3/7, more particularly from 6/4 to 4/6, and even more particularly is about 1/1.

The molar ratio of the precursor(s) of the Metal of Group VIIIB / the precursor(s) of the Metal of the Group VI may range from 70/30 to 30/70, in particular from 65/35 to 35/65, and more particularly from 60/40 to 40/60, even more particularly from 55/45 to 45/55.

In particular an excess of the Metal of Group VIIIB may be used. For example the molar ratio of the Metal of Group VIIIB / the precursor(s) of the Metal of the Group VI may range from 70/30 to 50/50, in particular from 68/32 to 55/40, and more particularly from 67/33 to 60/40.

This may allow obtaining a catalyst precursor having alpha, hydrated and beta phases. This may in particular partly stabilise beta phase among alpha phase at room temperature, this beta phase being more active toward hydrogenation.

Such a catalyst precursor may lead, for example once sulfided, to a more efficient catalyst for HDS and/or deep-HDS (hydrodesulfuration).

Following one embodiment, the at least two, in particular all, precursors, are all in the same mixture, in particular solution, which is then brought to specific pressure and temperature conditions, in particular to supercritical conditions.

Following another embodiment at least two mixtures, in particular solutions, more particularly one mixture per precursor, is brought to specific pressure and temperature conditions, in particular to supercritical conditions and then are mixed together. This embodiment may prevent a reaction between precursors and/or precipitation before the precursors are brought to specific pressure and temperature conditions, in particular to supercritical conditions.

In order to solubilise a precursor in a mixture of water and alcohol, it is possible to proceed by first solubilise it in water and once solubilised in water to add alcohol or to first solubilise it in alcohol and once solubilised in alcohol then water is added.

In particular once the precursor is solubilised in a mixture of water and alcohol, the mixture is the one intended to be submitted to specific pressure and temperature conditions, more particularly to supercritical pressure and temperature conditions.

The bulk catalyst precursor presents a S_{BET} superior or equal to 80 m²/g, in particular superior or equal to 90 m²/g, more particularly superior or equal to 100 m²/g, and more particularly a S_{BET} inferior or equal to 1000 m²/g, even more particularly inferior or equal to 500 m²/g, and still even more particularly inferior or equal to 200 m²/g.

The bulk catalyst precursor may present an alpha phase, a hydrated phase and/or a beta phase. More particularly the catalyst precursor presents a beta-phase, in particular it presents a beta-phase and an alpha phase. The bulk catalyst precursor may comprise a beta-phase in the alpha phase.

The presence of alpha and beta phases may be determined by XRD (X-Ray Diffraction).

The catalyst precursors, and the catalysts obtained with these catalyst precursors, may exhibit a higher concentration of active sites compared to supported equivalent catalysts and catalyst precursors.

The bulk catalyst precursor may be recovered as particles. The particles of bulk catalyst precursor may be recovered through a filter, in particular a refrigerated filter. For example the filter may be refrigerated by an ice-bath.

The particles may also be recovered as dispersion or suspension in solution.

The method may be processed continuously. This may be advantageous in terms of easiness of production, of quantity produced and/or this may shorten the time of production, in particular as compared with batch methods.

In the method, the reaction may proceed in less than 10 minutes, in particular less than 5 minutes, and more particularly less than 1 minute.

The method may comprise a further step of calcinating the particles of catalyst precursor.

The bulk catalyst precursor may be obtained or may be obtainable with the method disclosed in this description.

The bulk catalyst precursor comprising Group VIIIB and/or Group VIB metal, in particular of the NiMo, CoMo, NiW, CoW, CoNiMo or CoNiW type, may have a S_{BET} superior or equal to 80 m²/g, in particular superior or equal to 90 m²/g, more particularly superior or equal to 100 m²/g. It may also have a S_{BET} inferior or equal to 1000 m²/g, more particularly inferior or equal to 500 m²/g, and even more particularly inferior or equal to 200 m²/g.

The bulk catalyst precursor may have a content of C lower or equal to 1 % w/w, lower or equal to 0.5 % w/w.

The bulk catalyst precursor may have a content of N lower or equal to 0.1 % w/w, lower or equal to 0.01 % w/w, or even lower than 0.001 % w/w.

These ratios may be measured with elemental analysis, also called CHNS.

The bulk catalyst precursor may comprise molar ratios of Metal of Group VIIIB / Metal of Group VI ranging from 10/1 to 1/10, in particular from 7/3 to 3/7, more particularly from 6/4 to 4/6, and even more particularly is about 1/1.

It is to be noted that the molar ratio Group VIIIB metal and/ Group VIB metal, such as Ni/Mo, Co/Mo, Ni/W, Co/W, CoNi/Mo or CoNi/W, may be different from 1.

This ratio may depend on the initial ratio of precursors.

The bulk catalyst precursor may comprise alpha, beta and/or hydrated phase.

It may be advantageous to have catalyst precursor with a ratio of Group VIIIB metal and/ Group VIB metal, such as Ni/Mo, Co/Mo, Ni/W, Co/W, CoNi/Mo or CoNi/W, superior to 1, as it may lead to a catalyst precursor having an hydrated, an alpha and a beta phase.

Following another aspect, the invention has for subject matter a method for preparing a bulk catalyst comprising the step consisting to activate the catalyst precursor to catalyst. In particular, the bulk catalyst is obtained or obtainable from a bulk cata

In particular the catalyst precursor is activated by being sulfided. It may be sulfided by conventional methods, in particular those typically used in the art.

More precisely, it may be sulfided in a flow of pure hydrogen sulfide, in a mixture of hydrogen sulfide and hydrogen and/or in a flow of hydrogen and a mixture of light hydrocarbons containing at least one sulfur compound, at a temperature ranging from 150 to 800°C.

Following one embodiment, the catalysts is obtained by charging the catalyst precursor in a reactor and submits it to a hydrocarbon feedstock comprising at least one sulfur compound and hydrogen at a temperature above 100°C. In particular the reactor is the reactor in which the catalyst is used to process the reaction it catalyses, for example dehydrosulfuration.

The bulk catalyst comprises Group VIIIB and/or Group VIB metal, in particular of the NiMo, CoMo, NiW, CoW, CoNiMo or CoNiW type, and may have a S_{BET} superior or equal to 80 m²/g, in particular superior or equal to 90 m²/g, more particularly superior or equal to 100 m²/g. It may also have a S_{BET} inferior or equal to 1000 m²/g, more particularly inferior or equal to 500 m²/g, and even more particularly inferior or equal to 200 m²/g.

Of course, the catalyst may be obtained or be obtainable with the method disclosed above.

The invention also has for subject matter a catalyst as defined above for hydroprocessing of a hydrocarbon feedstock, in particular comprising sulfur and/or nitrogen containing organic compounds.

The invention also has for subject matter the use of a catalyst as defined above for hydroprocessing of a hydrocarbon feedstock, in particular comprising sulfur and/or nitrogen containing organic compounds.

The invention also has for subject matter a method for deep or ultra deep hydrodesulfuration of sulfur and/or nitrogen containing hydrocarbon feed comprising contacting the feed with a bulk catalyst as above.

The following examples are presented in order to illustrate the invention.

### EXAMPLES

### Example 1: Ni-Mo oxides directly after synthesis in sc-H₂O/EtOH (1:1 molar)

The method to synthesize bulk catalyst precursor is based on a chemical transformation of metallic precursors. The process falls into different steps:
A determined amount of the precursors is solubilized in the solvent, which is a mixture water/EtOH (molar ratio 1:1). That permits to solubilize metallic, in this case molybdenum and nickel, precursors.

MoO₂²⁺[CH₃COCHCOCH₃]₂ is directly solubilized in the mixture whereas the Ni2⁺[OOC-CH3]₂ is first put into distillate water before adding the proper quantity of alcohol.

The solutions are put into an ultrasonic bath to improve and quicken this step. The two solutions are then put together for a one-line injection or kept separate for a two-line injection process.

Practically, the molybdenum concentration is [Mo] = 7.2.10⁻³ mol.L⁻¹ and nickel concentration is the same to have the wished stoichiometry (1:1 molar in this example).

The solutions of precursors are injected, the mixture containing the precursors then reaches its supercritical condition, 290°C and 230 bars, in the reactor, and the chemical reaction takes place leading to the nucleation and growth of the nanoparticles. The time of residence being 55 seconds.

The nanoparticles thus formed in the reactor follow their way to the filter deepened in the ice bath to quench the growth of nanoparticles.

The system is then brought back to room temperature and atmospheric pressure by injecting water in the reactor to help cooling down and to wash the product.

Finally, once the experiment is over, the filter is cleaned with distilled water and the product is recovered by vacuum filtration of the resulting slurry, washed with distilled water, and the product is dried at room temperature and crushed in a mortar to condition it as a powder.

The catalyst precursor obtained exhibit the following properties:
S_{BET} 134 ± 14 m².g⁻¹,
CHNS: 0.34 ± 0.13 w% C ; 0.99 ± 0.26 w% H ; 0 w% N ; 0 w% S, and
ICP: Ni/Mo = 1 ± 0.08

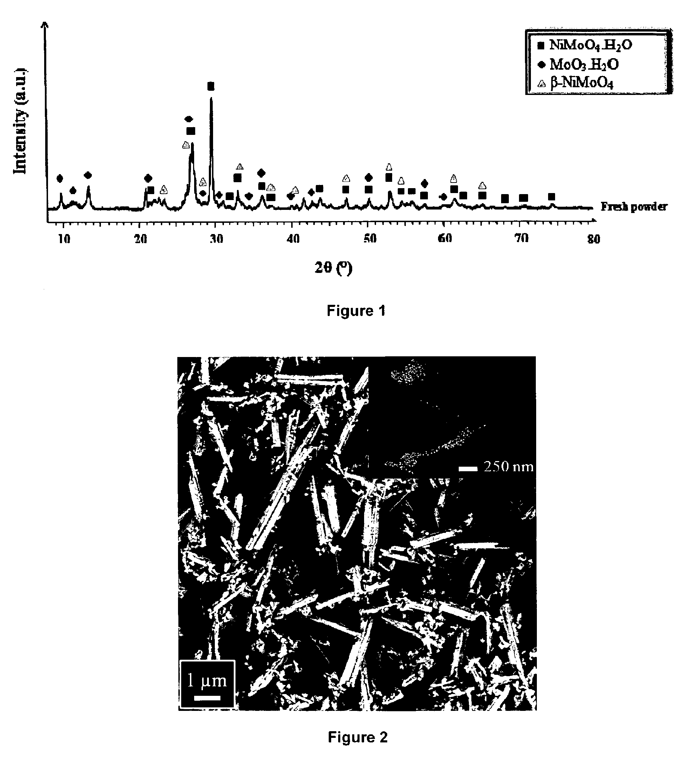

The XRD of the obtained particles of NiMo catalyst precursor is shown on figure 1 and ascanning electron microscopy (SEM) picture of catalyst precursor particles is shown on figure 2.

### Example 2: Ni-Mo oxides after synthesis in sc-H₂O/iPrOH (1:1 molar)

The same protocol than in example 1 is used for example 2, except that Ethanol is changed for Isopropanol.

The catalyst precursor obtained exhibit the following properties:
S_{BET} 179 ± 12 m².g⁻¹
CHNS: 0.37 ± 0.11 w% C; 1.24 ± 0.21 w% H; 0 w% N; 0 w% S
ICP: Ni/Mo = 1 ± 0.14

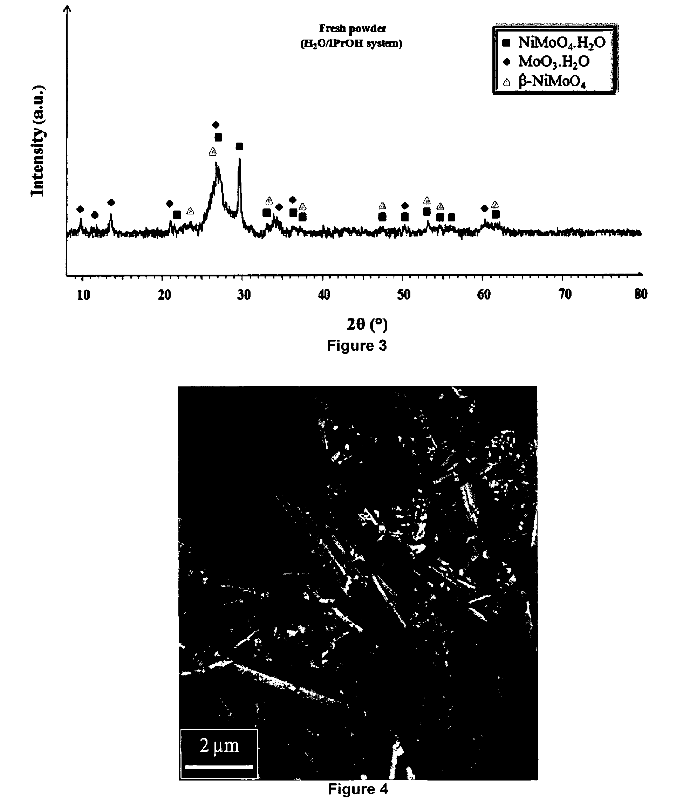

The XRD of the obtained particles of NiMo catalyst precursor is shown on figure 3 and a SEM picture of the particles is shown on figure 4.

### Example 3: Ni-Mo oxides after calcination 3h at 400 °C with a synthesis in sc-H₂O/iPrOH (1:1 molar)

The same protocol than in example 1 is used, except that Ethanol is changed for Isopropanol and the powder is calcined 3 h at 400 °C.

The catalyst precursor obtained exhibit the following properties:
S_{BET} 119 ± 10 m².g⁻¹
CHNS: 0.1 ± 0.08 w% C; 0.56 ± 0.11 w% H; 0 w% N; 0 w% S
ICP: Ni/Mo = 1 ± 0.14

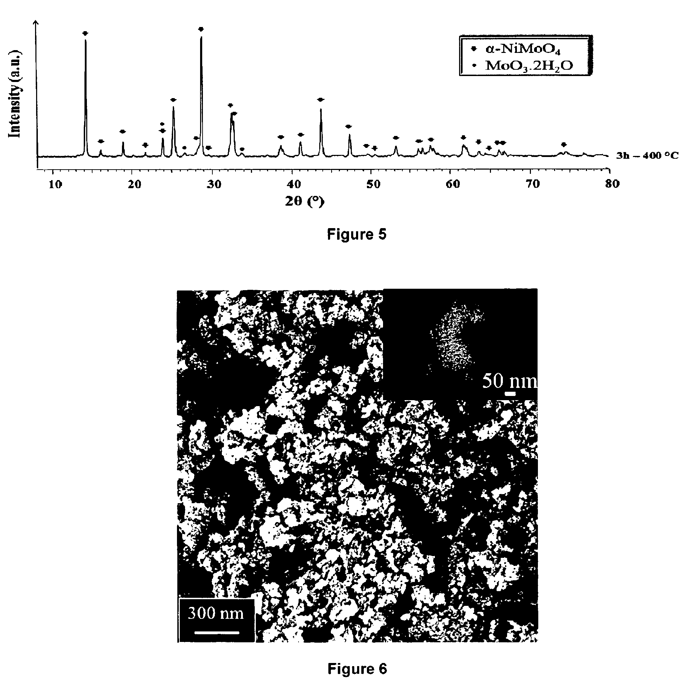

The XRD of the obtained particles of NiMo catalyst precursor is shown on figure 5 and a microscopic enlargement of the particles is shown on figure 6.

### Example 4: Co-Mo oxides synthesized in sc-H₂O/iPrOH (1:1 molar)

The same protocol than in example 1 is used, except that Ethanol is changed for Isopropanol and and Ni²⁺[OOC-CH₃]₂ is changed for Co²⁺[OOC-CH₃]₂.

The catalyst precursor obtained exhibit the following properties:
S_{BET}: 52 ± 9 m².g⁻¹
CHNS: 0.37 ± 0.11 w% C; 1.24 ± 0.21 w% H; 0 w% N; 0 w% S
ICP: Ni/Mo = 1 ± 0.14

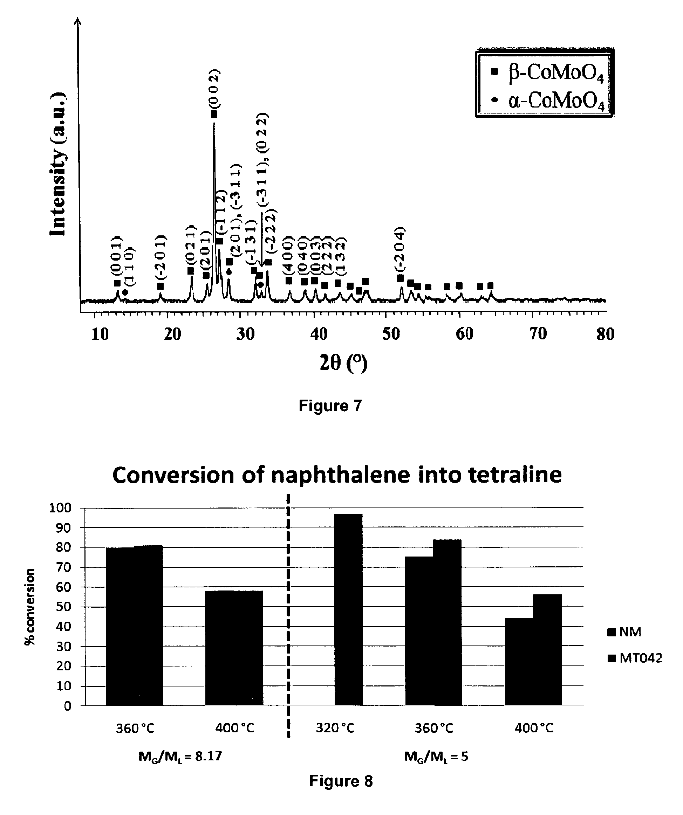

The XRD of the obtained particles of CoMo catalyst precursor is shown on figure 7.

### Example 5: Conversion of naphthalene into tetraline with MT042: (66 at% Ni, 34 at% Mo, 110 m².g⁻¹)

### Model feedstock

This example is processed on the following model feedstock having the composition of the model feedstock described in Table 1.

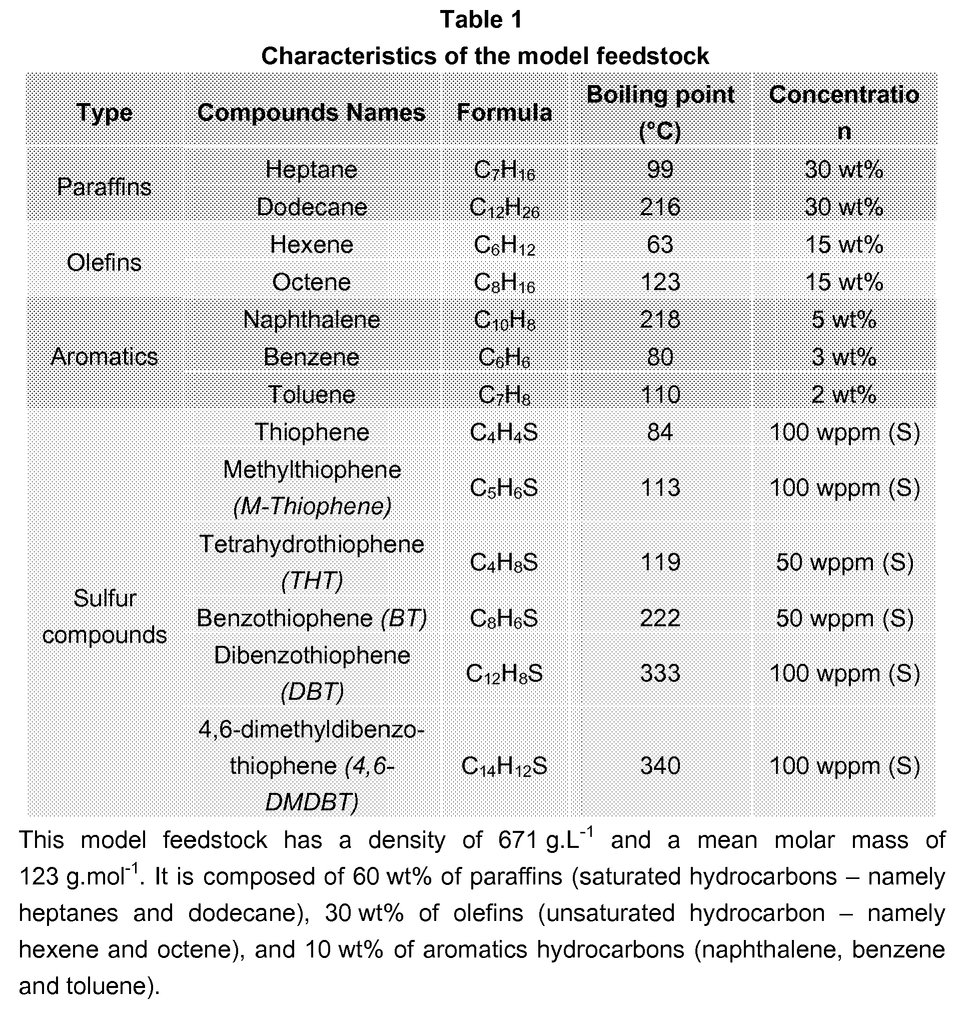

### Reference catalysts

A commercial catalyst is used as reference for the tests on NiMoO₄: NM (4 w% NiO, 14 w% MoO₃/_{Y}-Al₂O₃, similar to catalysts classically described in the literature), and for the tests on CoMoO₄: CM (3 wt% CoO, 14 wt% MoO₃/Al₂O₃, similar to catalysts classically described in the literature).

For these examples, the powder of the catalyst is pelletized at 3.5 t for 1 min, crushed and sieved to particles between 0.25 µm and 0.425 µm. 0.31 mL of catalyst is mixed with silicon carbide up to 2 mL to form the catalytic bed. It is then subjected to a gas flow of 10 % in volume of H₂S in H₂ for 5 h at 400 °C. In order to vary conversion, experiments were performed at three different temperatures for most of the catalysts. Starting at 320 °C, we then switch to 360 °C to finish at 400 °C. The LHSV were set at 19 h⁻¹ and we varied the M_{G}/M_{L} from 5 to 8.17. The products of the reaction are analyzed in a chromatograph equipped with two detectors: a FID and a PFPD.

The catalyst precursors are obtained following the procedure described in example 1. In this example 5, the catalyst precursor MT042 is obtained following the example1 procedure and with a molar ratio Ni²⁺ [OOC-CH₃]₂ to MoO₂²⁺[CH₃COCHCOCH₃]₂ of 1.95/1.

The catalyst precursor is activated with a sulfidation step to convert the metal oxides into the metal sulfides, which are the active catalysts for HDS. The catalytic bed is subjected to a gas flow of 10 % in volume of H₂S in H₂ for 5 h at 400 °C.

The results are shown on figure 8.

### Example 6: Influence of the composition on the catalytic activity with NM, MT044 (66 at% Ni, 34 at% Mo, 110 m².g⁻¹), and MT072: (62 at% Ni, 38 at% Mo, 80 m².g⁻¹), LHSV = 39 h⁻¹

In this example 6, the catalyst precursor MT044 is obtained following the example1 procedure and with a molar ratio Ni²⁺[OOC-CH₃]₂ to MoO₂²⁺[CH₃COCHCOCH₃]₂ of 1.95/1, and the catalyst precursor MT072 is obtained following the example1 procedure and with a molar ratio Ni2⁺[OOC-CH₃]₂ to MoO₂²⁺[CH₃COCHCOCH₃]₂ of 1.63/1.

The catalyst precursor is activated with a sulfidation step to convert the metal oxides into the metal sulfides, which are the active catalysts for HDS. The catalytic bed is subjected to a gas flow of 10 % in volume of H₂S in H₂ for 5 h at 400 °C.

The same protocol as in example 5 is followed but this time, the amount of catalyst was of 0.16 mL, the LHSV was set at 39 h⁻¹ and we fixed the M_{G}/M_{L} at 5. A forth test were carried out back at 320 °C.

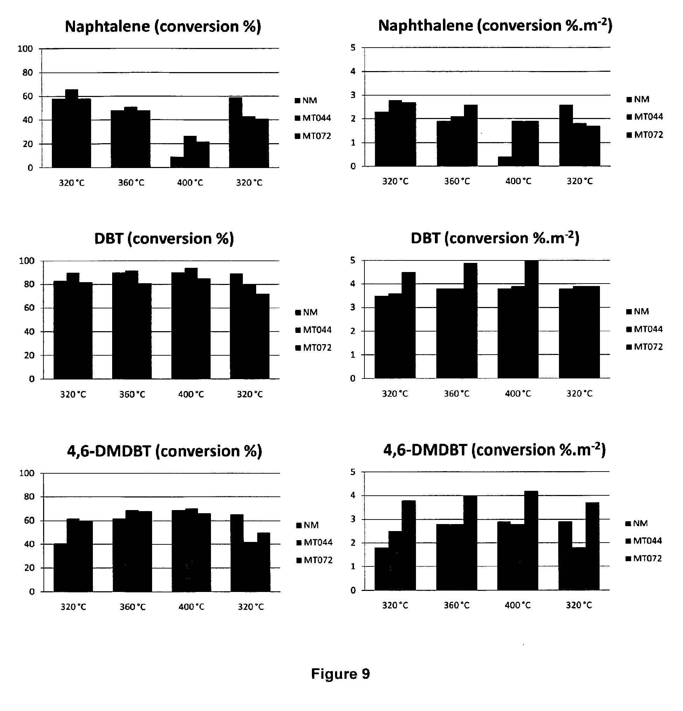

The results are shown on figure 9.

### Example 7: Influence of the promoter on the catalytic activity with CM, MT081 (50 at% Co, 50 at% Mo, 40 m².g⁻¹), LHSV = 150 h⁻¹

In this example 7, the catalyst precursor MT081 is obtained according to example 4 procedure.

The catalyst precursor is activated with a sulfidation step to convert the metal oxides into the metal sulfides, which are the active catalysts for HDS. The catalytic bed is subjected to a gas flow of 10 % in volume of H₂S in H₂ for 5 h at 400 °C.

The same protocol as in example 5 is followed but this time, the amount of catalyst was of 40 µL, the LHSV was set at 150 h⁻¹ and we fixed the M_{G}/M_{L} at 5. A forth test was carried out back at 320 °C.

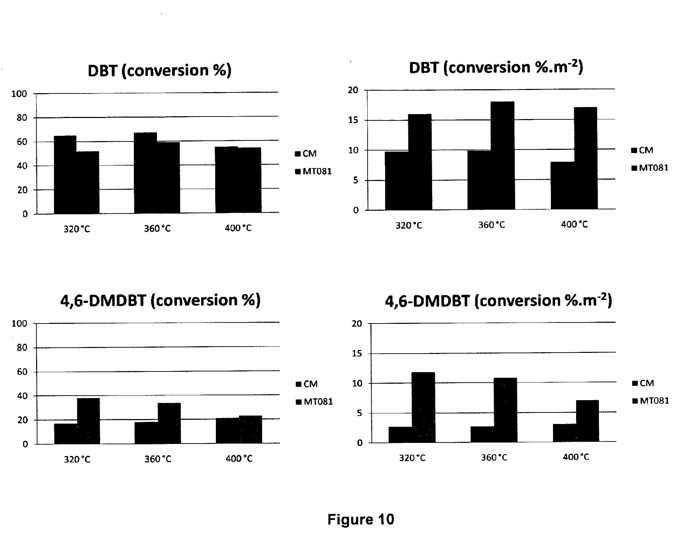

The results are shown on figure 10.

The examples 5 to 7 show that the catalyst obtained from the catalyst precursor exhibits excellent properties.

In particular Bulk HDS catalysts synthesized according to the invention, for example NiMoO₄ or CoMoO₄, perform better than the commercial references they are compared with.

The bulk material shows better aromatics hydrogenation activity than the commercial references it is compared with.

For similar conversion under similar operating conditions, a lower mass of the catalyst according to the invention can be used than with the commercial reference NM or CM, respectively.

For similar conversion with similar amount of catalysts, a lower temperature can be used with the catalyst according to the invention than with NM or CM, respectively. For similar conversion with similar amount of catalysts, a lower H₂ partial pressure can be used with the catalyst according to the invention than with NM or CM, respectively.

The catalyst according to the invention proves to be active for converting a real feedstock chosen among the most difficult to treat and with results comparable or superior to the commercial references tested.

## Claims

1. Method for preparing a bulk catalyst precursor, in particular comprising at least one metal from Group VIIIB and/or one metal of Group VIB, more particularly of the NiMo, CoMo, NiW, CoW, CoNiMo or CoNiW type, comprising the following steps:
a) reacting precursors of the desired catalyst precursor in a mixture comprising, or consisting of, precursors and at least one solvent comprising, or consisting of, water and/or alcohol, said mixture being under a pressure superior or equal to 5 bars and a temperature superior or equal to 100°C, and
b) recovering catalyst precursor, in particular as particles.

2. Method according to claim 1, **characterized in that** the bulk catalyst presents a S_{BET} superior or equal to 80 m²/g, in particular superior or equal to 90 m²/g, more particularly superior or equal to 100 m²/g, and more particularly a S_{BET} inferior or equal to 1000 m²/g.

3. Method according to claim 1 or 2, **characterized in that** the alcohol is chosen from the group consisting of methanol, ethanol, n-propanol, iso-propanol and their mixtures.

4. Method according to any of claims 1 to 3, **characterized in that** the molar ratio water/alcohol ranges from 99/1 to 1/99.

5. Method according to any of claims 1 to 4, **characterized in that** the precursors are soluble in alcohol and/or water, in particular the precursors are chosen from metal complexes of the Group VIIIB and/or of the Group VI, in particular Ni, Mo, Co and/or W, with acetylacetonate (acac), acetates, carbonates, nitrates, chlorides, hydroxides, alcoxydes, and their mixtures.

6. Method according to any of claims 1 to 5, **characterized in that** the molar ratio Metal of the Group VIIIB / Metal of the Group VI is ranging from 10/1 to 1/10, in particular from 7/3 to 3/7, more particularly from 6/4 to 4/6, and even more particularly is about 1/1.

7. Method according to any of claims 1 to 6, **characterized in that** at least two solutions, in particular one solution per precursor, is brought to pressure, then mixed together and brought to temperature.

8. Method according to any of claims 1 to 7, **characterized in that** it is processed continuously.

9. Method according to any of claims 1 to 8, **characterized in that** the reaction time is less than 10 minutes, in particular less or equal than 5 minutes, and more particularly less or equal than 1 minute.

10. Bulk catalyst precursor comprising Group VIIIB and/or Group VIB metal, in particular of the NiMo, CoMo, NiW, CoW, CoNiMo or CoNiW type, having a S_{BET} superior or equal to 80 m²/g, in particular superior or equal to 90 m²/g, more particularly superior or equal to 100 m²/g.

11. Bulk catalyst precursor according to claim 10, **characterized in that** it comprises a hydrated phase, an alpha phase and/or a beta phase.

12. Bulk catalyst precursor according to claim 10 and 11, **characterized in that** it has a content of C lower or equal to 1 % w/w and/or a content of N lower or equal to 0.1 % w/w.

13. Bulk catalyst precursor according to any of claims 10 to 12, **characterized in that** it has a hydrated, an alpha phase and a beta phase.

14. Bulk catalyst comprising Group VIIIB and/or Group VIB metal, in particular of the NiMo, CoMo, NiW, CoW, CoNiMo or CoNiW type, and may have a S_{BET} superior or equal to 80 m²/g, in particular superior or equal to 90 m²/g, more particularly superior or equal to 100 m²/g, in particular the bulk catalyst is sulfided.

15. Method for deep or ultra deep hydrodesulfuration of a sulfur and/or nitrogen containing hydrocarbon feed comprising contacting the feed with a sulfided bulk catalyst as defined in claim 14.
